# EUROPEAN PATENT APPLICATION

(11) **EP 1 559 621 A2**
(43) Date of publication of application: **03.08.2005**
(21) Application number: 05000947.1
(22) Date of filing: 18.01.2005
(51) Int. Cl.: B60R 21/26

(54) **Hybrid inflator**

(30) Priority: 02.02.2004 JP 2004024988
(71) Applicant: Daicel Chemical Industries Co., Ltd., Sakai-shi, Osaka (JP)
(72) Inventor: Gotoh, Yuzo, Himeji-shi Hyogo (JP); Nakayasu, Masayuki, Himeji-shi Hyogo (JP); Matsuda, Naoki, Himeji-shi Hyogo (JP)
(74) Representative: Grünecker, Kinkeldey, Stockmair & Schwanhäusser Anwaltssozietät

(57) **Abstract**

A hybrid inflator (10) includes: a cylindrical housing (11) having an open end portion, and an interior thereof being adapted to be charged with a pressurized gas; an igniter housing (20) attached to the open end portion, in which ignition means are accommodated; a combustion chamber housing (40) storing a gas generating agent (41) therein and having at least one through hole (45a), the combustion chamber housing being disposed inside the cylindrical housing and connected to the igniter housing; a communication path (26) extending between the igniter housing and the combustion chamber housing; a rupturable plate (50) closing the communication path, the rupturable plate having a circular closing portion (51) which closes the communication path, and a fixing portion (52) formed on a peripheral edge of the closing portion, an outer diameter of the rupturable plate and the inner diameter of the combustion chamber housing (40) being about the same.

## Description

### BACKGROUND OF THE INVENTION

### 1. Field of the Invention

The present invention relates to a hybrid inflator suitable for use in an air bag system for a lateral collision.

### 2. Description of Related Art

In an air bag system installed in a vehicle, a gap between a passenger and structural components of a vehicle (e.g. , a door panel and so on) is small, and hence an inflation speed of an air bag has to be set higher than that of the driver side and the front passenger side in order to protect the passenger in a lateral collision.

Therefore, in this type of air bag system for a lateral collision, an inflator which uses a pressurized gas such as helium or argon is employed as air bag inflation means. Further, in order to secure a predetermined inflation pressure easily, a hybrid inflator using both a pressurized gas and a combustion gas is employed as the air bag inflation means.

When a vehicle collides, the hybrid inflator has to ignite and burn a gas generating agent by an igniter, and discharge the pressurized gas charged into an enclosed space, and hence the structure of the hybrid inflator is more complicated than that of an inflator which uses only pressurized gas as the air bag inflation means.

US-A1 2003/57689 and US-B 5,788,275 disclose such structure.

### SUMMARY OF THE INVENTION

The present invention provides a hybrid inflator that can be provided with a simpler structure, and that is capable of inflating an air bag by discharging gas more quickly.

To achieve this, the present invention provides a hybrid inflator comprising a cylindrical housing, both ends of which are open and the interior of which is charged with a pressurized gas, an igniter housing attached to an opening portion on one end of the cylindrical housing, in which ignition means are accommodated, and a diffuser portion attached to an opening portion on the other end of the cylindrical housing and provided with a gas discharge port. The hybrid inflator further includes a combustion chamber housing storing a gas generating agent, the combustion chamber housing being disposed inside the cylindrical housing, connected to the igniter housing, and provided with a through hole(s) formed in a wall surface thereof,
a first communication path extending between the igniter housing and the combustion chamber housing being closed by a first rupturable plate, and a second communication path extending the diffuser portion and the cylindrical housing being closed by a second rupturable plate,
the first rupturable plate including a circular closing portion which closes the first communication path, and a fixing portion on the peripheral edge of the closing portion and the outer diameter of the first rupturable plate and the inner diameter of the combustion chamber housing being identical or similar.

The present invention further provides a hybrid inflator, comprising a cylindrical housing charged with a pressurized gas provided therein;
a gas exit port for discharging the pressurized gas therefrom;
an igniter housing attached to the cylindrical housing for accommodating therein ignition means, such that the igniter housing communicates with the cylindrical housing through the communication pass;
a combustion chamber housing for accommodating therein a gas generating agent, and formed by a peripheral wall and a base portion, the combustion chamber housing being provided within the cylindrical housing such that one end opposite to the base portion opposes the communication path, the peripheral wall being formed with a through hole(s); and
a rupturable plate closing the communication path, the rupturable plate including a circular closing portion that closes the communication path, and a fixing portion on a peripheral edge of the closing portion, and an outer diameter of the rupturable plate and an inner diameter of the combustion chamber housing being identical or similar.

By making the outer diameter of the first rupturable plate (i.e., the combined diameter of the closing portion and fixing portion) and the inner diameter of the combustion chamber housing identical or similar, ignition energy (e.g., flame and high temperature gas) generated in the igniter housing passes over the gas generating agent in the combustion chamber housing efficiently such that contact between the ignition energy and the gas generating agent is increased. As a result, the ignitability and combustibility of the gas generating agent is improved.

By improving the ignitability and combustibility of the gas generating agent in this manner, the internal pressure of the cylindrical housing rises more quickly, thereby shortening the rupture time of the second rupturable plate which is ruptured by the increase in internal pressure.

By means of this operational process, the time from the vehicle collision to the beginning of air bag inflation is shortened, which is particularly suitable for an air bag system for lateral collisions. Note that when helium, which has a high sound velocity (970m/sec) is used as the pressurized gas, the time required for the second rupturable plate to rupture can be shortened even further, and hence the inflation time of the air bag can also be shortened.

In the hybrid inflator of the present invention, the combustion chamber housing and the first rupturable plate may be formed integrally.

By forming the combustion chamber housing and the first rupturable plate as an integral body, manufacture of the component and attachment thereof to the inflator are made more simple than when the combustion chamber housing and first rupturable plate are provided as separate members.

Note that when the combustion chamber housing and the first rupturable plate are formed as an integral body in this manner, the first rupturable plate is preferably provided with a weak portion to ensure that only the first rupturable plate is ruptured quickly by the ignition energy generated when the igniter is activated. The weak portion needs to be provided in consideration of both rupturability and pressure resistance to the pressurized gas, and therefore methods such as inserting a cross-shaped shallow notch partway into the central portion of the first rupturable plate, making the central portion thinner than the periphery, and so on, for example, may be applied to form the weak portion.

The hybrid inflator of the present invention may also be designed such that the combustion chamber housing comprises a peripheral surface portion and a base surface portion, the combustion chamber housing is connected to the first communication path at the opening portion, a through hole(s) is provided only in the peripheral surface portion, and the through hole is positioned directly opposite an inner wall surface of the cylindrical housing with a gap therebetween.

When the gas generating agent provided inside the combustion chamber housing burns, the resulting combustion gas sometimes contains a mist (e.g., a solid component, for example a metallic component, in the gas generating agent which is generated by combustion of the gas generating agent). However, when the through hole in the combustion chamber housing and the inner wall surface of the cylindrical housing are positioned to directly oppose one another, the combustion gas ejected through the through hole first collides the inner wall surface of the cylindrical housing. At this time, the temperature of the inner wall surface is lower than that of the mist, and hence the mist component adheres to the inner wall surface and hardens. Thus the amount of mist reaching the diffuser portion is reduced.

The hybrid inflator of the present invention may also be designed such that the combustion chamber housing comprises a peripheral wall portion and a base portion, the combustion chamber housing is connected to the first communication path at the opening portion, a through hole (s) is provided in both the peripheral wall portion and the base portion, a total opening area of the through hole(s) in the peripheral wall portion is larger than a total opening area of the through hole(s) in the base portion, and the through hole(s) in the peripheral wall portion are positioned directly opposing an inner wall surface of the cylindrical housing with a gap therebetween.

By further providing a through hole in the base portion of the combustion chamber housing, the speed at which the internal pressure of the cylindrical housing rises can be increased in comparison with a case in which high temperature combustion gas is ejected only from the peripheral wall portion. In particular, by positioning the through hole in the base portion directly opposite the second rupturable plate, and using helium, which has a high sound velocity, as the pressurized gas, the combustion gas ejected through the through hole in the base portion advances toward the second rupturable plate as a shock wave, and impinges on the second rupturable plate at high speed, thereby improving the rupturability of the second rupturable plate.

The hybrid inflator of the present invention may also be designed such that the combustion chamber housing comprises a peripheral wall portion and a base portion, the combustion chamber housing is connected to the first communication path at the opening portion, the through hole (s) is provided in at least the peripheral wall portion, and an opening ratio of the through hole(s) provided in the peripheral wall portion increases toward the base portion.

The opening ratio of the through holes corresponds to the opening area per unit area, and is adjusted by applying a method of altering the diameter without changing the number of through holes (in other words, a method of increasing the diameter of only the through holes near the base portion among evenly disposed through holes, or a method of gradually increasing the hole diameter of the through holes toward the base portion), or a method of increasing the number of through holes without altering the hole diameter of the through holes (in other words, a method of increasing the formation density of the holes). Note that the through holes may be provided in the peripheral wall portion alone, or in both the peripheral wall portion and base portion.

By increasing the opening ratio of the through holes toward the base portion of the combustion chamber housing (in other words, away from the igniter) in this manner, a situation in which only the gas generating agent in the vicinity of the igniter burns well and the gas generating agent removed from the igniter (i.e., near the base portion) burns poorly can be prevented. Moreover, the combustion gas moves more easily from the combustion chamber housing into the cylindrical housing, and hence stable combustion can be obtained.

The reason for this is as follows. In an initial stage when the gas generating agent inside the combustion chamber housing has begun to burn, only the gas generating agent in the vicinity of the igniter ignites and burns, whereas the gas generating agent near the base portion remains in an unburned state. Hence, by increasing the proportion of through holes toward the base portion, the combustion gas flows to the base portion more easily, thus enabling the unburned gas generating agent to ignite and burn favorably.

The inflator of the present invention is particularly suitable as a curtain air bag inflator or side air bag inflator for lateral collisions, but may also be applied as an inflator for a driver side, an inflator for a front passenger side, a knee bolster inflator, and so on.

In the hybrid inflator of the present invention, the ignitability and combustibility of the gas generating agent is improved, and hence the time required to eject gas from the gas discharge port can be shortened. Accordingly, the hybrid inflator of the present invention may be applied favorably to an air bag system for use in lateral collisions, in which a short air bag inflation time is required.

### BRIEF DESCTIPTION OF THE DRAWINGS

Fig. 1 is a sectional view of a hybrid inflator in the axial direction thereof;
Fig. 2 is a partial sectional view of another embodiment of the hybrid inflator in Fig. 1; and
Fig. 3 is a longitudinal sectional view of a combustion chamber housing, serving as a different embodiment to that shown in Fig. 1.

### DETAILED DESCRIPTION OF THE PRESENT INVENTION

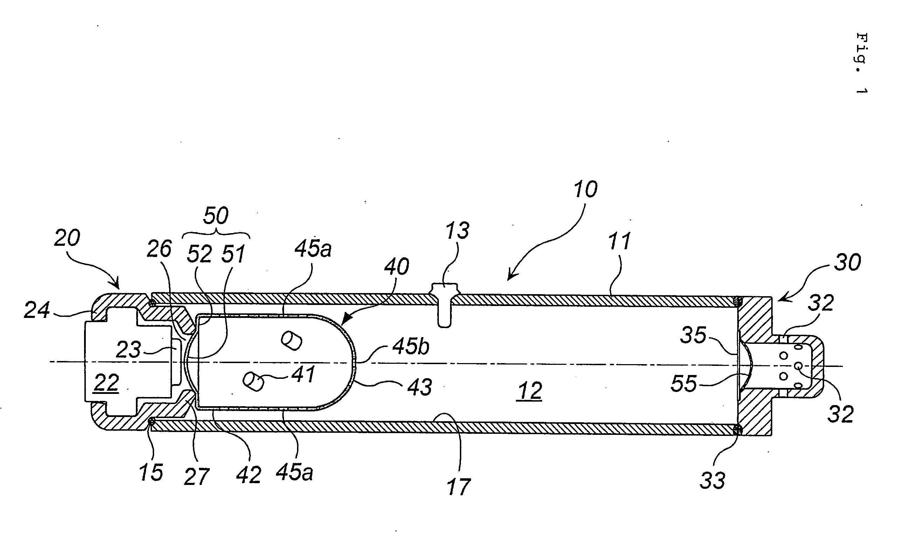

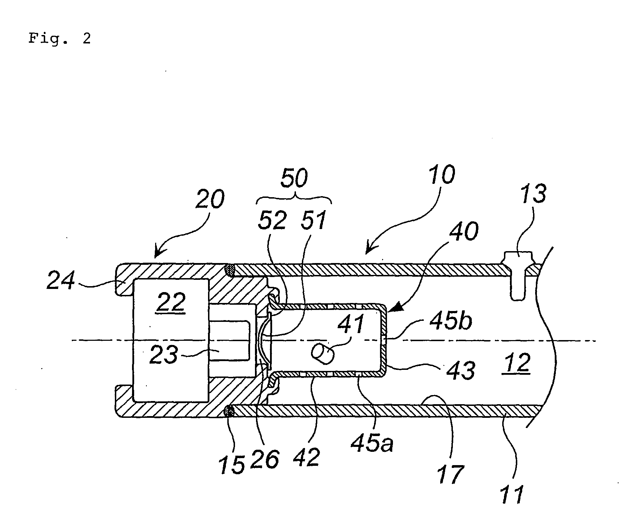

Embodiments of a hybrid inflator will be described using Figs. 1 and 2. Fig. 1 is a sectional view of a hybrid inflator in the axial direction thereof, and Fig. 2 is a partial sectional view of another embodiment.

The outer shell of a hybrid inflator 10 comprises a cylindrical housing 11, an igniter housing 20, and a diffuser portion 30.

The cylindrical housing 11 is a container made of highly pressure-resistant steel or the like, and a pressurized gas such as helium, argon, or nitrogen gas is charged into a sealed space 12 in the interior thereof. Helium is preferable as the pressurized gas due to its high sound velocity (970m/sec) . The charging pressure is set approximately 70, 000kPa at a maximum pressure. The pressurized gas is charged through a gap between a pin 13 and a side wall of the cylindrical housing 11. The pin 13 is fixed to the side wall by welding.

The igniter housing 20 accommodating ignition means is fixed to an opening portion at one end of the cylindrical housing 11 by welding at a welded portion 15.

As the ignition means, an electric igniter 22 provided with an ignition agent in a crown portion (i.e., an ignition portion) 23 thereof is accommodated inside the igniter housing 20. The igniter 22 is fixed by crimping a peripheral edge 24 of an opening portion at one end of the igniter housing 20. Note that the igniter 22 may be fixed by setting the igniter 22 in the igniter housing 20 so that a gap is formed therebetween, filling the gap with a thermoplastic resin, and causing the thermoplastic resin to harden.

The diffuser portion 30, provided with a plurality of gas discharge ports 32, is fixed to an opening portion at the other end of the cylindrical housing 11 by welding at a welded portion 33.

A combustion chamber housing 40 is disposed inside the cylindrical housing 11 (that defines a sealed space 12), and a required amount of a gas generating agent 41 is stored in the interior space of the combustion chamber housing 40.

The combustion chamber housing 40 comprises a peripheral wall portion 42 and a hemispherical base portion 43. A plurality of through holes 45a are provided in the peripheral wall portion 42, and a through hole 45b is also provided in the center of the base portion 43. The through hole may be provided in either or both of the peripheral wall portion 42 and the base portion 43.

Providing the through holes 45a in the peripheral wall portion 42 is preferable for producing the mist-reducing action as described above, and by providing the through hole 45b in the base portion 43, the progression of the shock wave, generated by combustion of the gas generating agent or an operation of the igniter, in the sealed space 12 can be used to improve the rupturability of a second rupturable plate 55.

Further, the through hole 45b provided in the base portion 43 is preferably positioned directly opposing the second rupturable plate 55. By disposing the through hole 45b and second rupturable plate 55 directly opposing each other in this manner, the shock wave produced by the combustion gas that is ejected through the through hole 45b advances directly toward and collides with the second rupturable plate 55, thus improving the rupturability thereof.

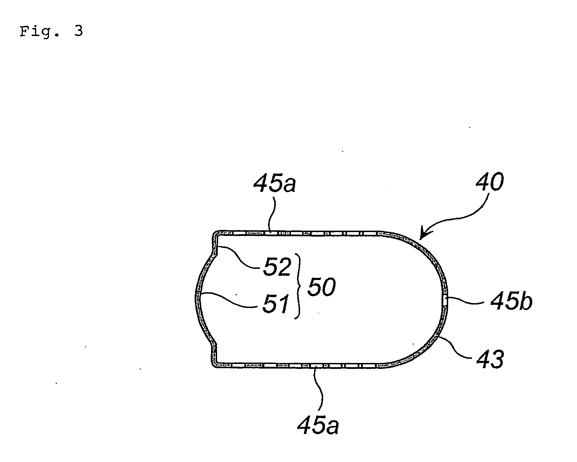

By increasing the number of through holes 45a away from the igniter 22, or in other words toward the base portion 43, as shown in Fig. 3, the opening ratio can be increased, enabling an improvement in the ignitability and combustibility of the gas generating agent 41.

A first communication path 26 between the igniter housing 20 and the combustion chamber housing 40 is closed by a first rupturable plate 50. The first rupturable plate 50 directly opposes the crown portion 23 of the igniter 22.

The first rupturable plate 50 comprises a circular closing portion 51 which closes the first communication path 26, and a fixing portion 52 on the peripheral edge of the closing portion 51. The outer diameter of the first rupturable plate 50 (that includes a closing portion 51 and a fixing portion 52) is similar to the inner diameter of the combustion chamber housing 40.

As shown in Fig. 1, the first rupturable plate 50 may be formed integrally with the combustion chamber housing 40. In such a case, the surface opposing the base portion 43 of the combustion chamber housing 40 forms the first rupturable plate 50. The first rupturable plate 50 and the combustion chamber housing 40 are both fixed by welding the fixing portion 52 of the first rupturable plate 50 to an opening portion peripheral edge 27 of the igniter housing 20.

When the first rupturable plate 50 and the combustion chamber housing 40 are formed as an integral body, a weak portion is preferably provided in the central portion of the closing portion 51 of the first rupturable plate 50. By providing such a weak portion, it is possible to ensure that the closing portion 51 alone ruptures reliably, thus improving the ignitability of the gas generating agent 41.

As shown in Fig. 2, the first rupturable plate 50 and the combustion chamber housing 40 may also be provided as separate members. In this case, the first rupturable plate 50 and the combustion chamber housing 40 are fixed to a peripheral edge 27 of the opening portion of the igniter housing 20 separately by welding. When provided as separate members in this manner, although fixing work is required for each of the first rupturable plate 50 and the combustion chamber housing 40, charging the gas generating agent 41 into the combustion chamber housing 40 and forming the combustion chamber housing 40 become easier.

The diffuser portion 30 and a second communication path 35 of the cylindrical housing 11 are closed by the second rupturable plate 55. The peripheral edge portion of the second rupturable plate 55 is fixed to the diffuser portion 30 by welding.

Next, an operation when the hybrid inflator 10 is incorporated into an air bag system of an automobile will be described.

When the vehicle collides, the igniter 22 activates to rupture the closing portion 51 of the first rupturable plate 50. The gas generating agent 41 is then ignited and burned by ignition energy (e.g., high temperature gas and/or a flame generated by the igniter 22) flowing into the combustion chamber housing 40. At this time, since the diameter of the first rupturable plate 50 and the inner diameter of the combustion chamber housing 40 are similar, the ignition energy passes over the gas generating agent 41 in the combustion chamber housing 40 with great efficiency, and thus the gas generating agent 41 achieves favorable ignitability and combustibility.

The high temperature combustion gas generated by combustion of the gas generating agent 41 is ejected through the plurality of through holes 45a formed in the peripheral wall portion 42 and the single through hole 45b formed in the base portion 43. Since the total opening area of the through holes 45a is larger than the opening area of the through hole 45b, combustion gas having higher temperature is ejected through the through holes 45a than the through hole 45b.

Having been ejected through the through holes 45a, the high temperature combustion gas collides against an inner wall surface 17 of the cylindrical housing 11, but since the temperature of the inner wall surface 17 is low, the mist contained in the high temperature combustion gas adheres to the inner wall surface 17, hardens, and is thus trapped. As a result, the amount of mist in the high temperature combustion gas is reduced.

Meanwhile, high temperature combustion gas is also ejected through the through hole 45b, and hence the internal pressure of the sealed space 12 is raised also by the high temperature combustion gas that is ejected through the through hole 45b. At this time, the combustion gas ejected through the through hole 45b forms a shock wave which advances directly toward and collides against the second rupturable plate 55.

As a result, the second rupturable plate 55 is ruptured, the pressurized gas and the high temperature combustion gas are discharged through the gas discharge ports 32, and the air bag is inflated. When helium is used as the pressurized gas, the sound velocity is large, and hence the propagation speed of the shock wave is high, preferably enabling the desired effect of a reduction in the rupture time of the second rupturable plate 55.

The invention being thus described, it will be obvious that the same may be varied in many ways. Such variations are not to be regarded as a departure from the spirit and scope of the invention, and all such modifications are intended to be included within the scope of the following claims.

## Claims

1. A hybrid inflator, comprising:
a cylindrical housing having a first open end portion and a second open end portion, and an interior thereof being adapted to be charged with a pressurized gas;
an igniter housing attached to the first open end portion, in which ignition means are accommodated, and a diffuser portion attached to the second end and provided with a gas discharge port;
a combustion chamber housing storing a gas generating agent therein and having at least one through hole, the combustion chamber housing being disposed inside the cylindrical housing and connected to the igniter housing;
a first communication path extending between the igniter housing and the combustion chamber housing;
a first rupturable plate closing the first communication path, the first rupturable plate having a circular closing portion which closes the first communication path, and a fixing portion formed on a peripheral edge of the closing portion, an outer diameter of the first rupturable plate and the inner diameter of the combustion chamber housing being one of identical and similar;
a second communication path extending between the diffuser portion and the cylindrical housing; and
a second rupturable plate closing the second communication path.

2. The hybrid inflator according to claim 1, wherein the combustion chamber housing and the first rupturable plate are formed integrally.

3. The hybrid inflator according to claim 2, wherein the first rupturable plate has a weakened portion.

4. The hybrid inflator according to any of claims 1 to 3, wherein the combustion chamber housing includes, a peripheral wall portion and a base portion, and connected to the first communication path at the first opening end portion, the at least one through hole is provided only in the peripheral wall portion at a position directly opposing an inner wall surface of the cylindrical housing with a gap therebetween.

5. The hybrid inflator according to any of claims 1 to 3, wherein the combustion chamber housing includes a peripheral wall portion and a base portion, and connected to the first communication path at the first opening end portion, the combustion chamber housing having at least one first through hole in the peripheral wall portion and at least one second through hole in the base portion, a total opening area of the at least one first through hole is larger than a total opening area of the at least one second through hole, and the at least one first through hole is positioned directly opposing an inner wall surface of the cylindrical housing with a gap therebetween.

6. The hybrid inflator according to any of claims 1 to 5, wherein the combustion chamber housing includes a peripheral wall portion and a base portion, and connected to the first communication path at the first opening end portion, the combustion chamber housing includes a plurality of through holes formed in the peripheral wall portion, an opening ratio increases as a distance to the base portion decreases.

7. A hybrid inflator, comprising:
a cylindrical housing charged with a pressurized gas provided therein;
a gas exit port provided in the cylindrical housing for discharging the pressurized gas therefrom;
an igniter housing attached to the cylindrical housing for accommodating therein ignition means, such that the igniter housing communicates with the cylindrical housing through a communication path;
a combustion chamber housing, having a base wall portion and a peripheral wall portion provided with at least one through hole, for accommodating therein a gas generating agent, the combustion chamber housing being provided inside the cylindrical housing such that an end of the combustion chamber housing opposing the base portion opposes the communication path; and
a rupturable plate closing the communication path, the rupturable plate including a circular closing portion that closes the communication path, and a fixing portion formed at a peripheral edge of the closing portion, an outer diameter of the rupturable plate and an inner diameter of the combustion chamber housing being one of identical and similar.

8. The hybrid inflator according to claim 7, wherein the combustion chamber housing and the rupturable plate are formed integrally.

9. The hybrid inflator according to claim 7 or 8, wherein the combustion chamber housing is formed with a plurality of through holes provided only on the peripheral wall such that the plurality of the through holes directly opposes an inner wall surface of the cylindrical housing with a gap therebetween.

10. The hybrid inflator according to claim 7 or 8, wherein a through hole is formed in the peripheral wall and in the base portion.

11. The hybrid inflator according to any of claims 1 to 6, wherein the combustion chamber housing includes, a peripheral wall portion and a base portion, and connected to the first communication path at the first opening end portion, the at least one through hole is provided in the base portion at a position directly opposing the second rupturable plate with a gap therebetween.

12. A hybrid inflator, comprising:
a cylindrical housing having an open end portion, and an interior thereof being adapted to be charged with a pressurized gas;
an igniter housing attached to the first open end portion, in which ignition means are accommodated;
a combustion chamber housing storing a gas generating agent therein and having at least one through hole, the combustion chamber housing being disposed inside the cylindrical housing and connected to the igniter housing;
a communication path extending between the igniter housing and the combustion chamber housing;
a rupturable plate closing the communication path, the rupturable plate having a circular closing portion which closes the communication path, and a fixing portion formed on a peripheral edge of the closing portion, an outer diameter of the rupturable plate and the inner diameter of the combustion chamber housing being one of identical and similar.
